# EUROPEAN PATENT APPLICATION

(11) **EP 3 835 187 A1**
(43) Date of publication of application: **16.06.2021**
(21) Application number: 19847962.8
(22) Date of filing: 09.08.2019
(51) Int. Cl.: B62K 15/00, B62K 21/12, B62K 21/18, B62L 3/00

(54) **LIGHTWEIGHT FOLDABLE MOBILITY SCOOTER PROVIDED WITH FRONT, REAR, LEFT AND RIGHT LIFTING HANDLES**

(30) Priority: 09.08.2018 CN 201821280035 U; 09.08.2018 CN 201821281554 U; 09.08.2018 CN 201821280980 U
(71) Applicant: Golden Technologies, Inc., Old Forge, Pennsylvania 18518 (US)
(72) Inventor: ZENG, Hongguo, Dongguan, Guangdong 523000 (CN); QIAO, Maozhi, Dongguan, Guangdong 523000 (CN)
(74) Representative: Dummett Copp LLP
(86) International application number: PCT/CN2019/099928
(87) International publication number: WO 2020/030083

(57) **Abstract**

A lightweight foldable mobility scooter provided with front, rear, left and right lifting handles. The scooter comprises a scooter bottom plate (1), wherein two sides of the scooter bottom plate (1) are respectively provided with a scooter bottom plate lifting handle (2); the two scooter bottom plate (1), handles (2) are respectively located at two sides of the scooter bottom plate (1), and are positioned at the centre of gravity after the mobility scooter is folded; and a scooter head lifting handle (3) is provided at a scooter head of the scooter bottom plate (1) and a tail portion of the scooter bottom plate (1) is provided with a scooter tail groove portion (4) used for cooperating with the scooter head lifting handle (3) for carrying.

## Description

### Technical field

The invention relates to vehicles, in particular to a light folding mobility scooter provided with front, rear, left, and right handle positions.

### Background technique

At present, a large part of the population needs to use transportation to move (such as the disabled, the elderly with limited mobility, etc.). With the development of society and the current situation of aging society, most families have elderly people, in order to facilitate the elderly to go out and need to use transportation. Most of the most commonly used transportation for the elderly are wheelchairs, and a small number of them use electric mobility scooters. The main reasons are that the current electric scooters are inconvenient to carry, difficult to carry, difficult to operate for the elderly, too large, and heavy, which all contribute to the low usage rate of electric scooters. A mobility scooter that is convenient to carry and transport is now designed to solve the above-mentioned problems.

### Summary of the Invention

The purpose of the present invention is to provide a light folding mobility scooter with front, rear, left, and right handles in view of the above-mentioned defects of the prior art.

In order to solve the above-mentioned shortcomings of the prior art, the technical solution provided by the present invention is: a lightweight folding mobility scooter with front, rear, left and right handle positions, including a vehicle floor, and a vehicle floor handle is provided on both sides of the vehicle floor. Two of the vehicle floor handles are located on both sides of the vehicle floor, and at the centre of gravity position of the scooter after being folded, a front handle is provided at the front of the vehicle floor, and the rear of the vehicle floor is provided with a groove part at the rear of the vehicle which used in cooperation with the handle of the front of the vehicle. The bottom of the vehicle floor is provided with a front wheel assembly, a rear wheel assembly and a driving device for driving the rear wheel assembly. A control device is provided on the upper end of the front T handle, and the control device is provided with a forward shift lever, a reverse shift lever, a speed control knob, a horn button, a front and rear light switch, and a battery power indicator.

As an improvement of the light foldable mobility scooter with front, rear, left, and right handle positions of the present invention, the vehicle floor handle is integrally formed with the vehicle floor, and the vehicle floor handle is passed on both sides of the vehicle floor. A through hole is formed to form a hollow-shaped floor handle.

As an improvement of the light folding mobility scooter provided with front, rear, left, and right handle positions of the present invention, the edge of the vehicle floor handle is flush with the side of the vehicle floor.

As an improvement of the light folding mobility scooter provided with front, rear, left, and right handle positions of the present invention, the front of the vehicle floor is provided with a front steering T handle that can be folded along the rear of the vehicle floor. A foldable seat support frame is provided on the upper plane near the left and right handles of the vehicle floor.

As an improvement of the light folding mobility scooter with front, rear, left, and right handle positions of the present invention, one side of the seat support frame is equipped with two or more T-handle head locks for turning the front of the vehicle and the folding and clamping of the T handle. buckle.

As an improvement of the light folding mobility scooter provided with front, rear, left, and right handle positions of the present invention, the handlebar lock is made of rubber, silicone or plastic components, and the end of the handlebar lock is provided with a U-shape, C-shape or half round bumps.

As an improvement of the light folding mobility scooter provided with front, rear, left, and right handle positions of the present invention, the front steering T handle is folded along the rear of the vehicle floor and is clamped and fixed with two T handle buckles.

Compared with the prior art, the advantages of the present invention are: the present invention is provided with a floor handle on both sides of the vehicle floor respectively, and the two floor handles are located on both sides of the vehicle floor, and are folded in the mobility scooter. When you need to move the vehicle, first fold the seat support frame and lay it flat on the floor of the vehicle, and then fold the front T handle so that the front T handle is stuck on the two head locks of the seat support frame, fixed, so that the front T handle will not swing. Since the two floor handles are located on both sides of the floor and are at the centre of gravity after the mobility scooter is folded, the left or right handles on both sides of the floor of the mobility scooter can keep the vehicle body balanced and convenient for transportation. It can also be a very convenient and easy two-handed mobility scooter with flat ends folded. A front handle is provided at the front of the vehicle floor, and the rear of the vehicle floor is provided with a rear groove part for handling with the front handle. When two people lift the vehicle, one can be at the front of the vehicle and the other at the rear of the vehicle, and the vehicle can be easily moved by holding the handle of the front and the groove at the rear of the vehicle. After the product is folded, the occupied space of the vehicle body can be greatly reduced, and it may be conveniently accommodated in a transport vehicle.

### Description of the drawings

In the following, the present invention and its beneficial technical effects will be described in further detail based on the drawings and specific embodiments, in which:
Fig. 1 is a schematic diagram of the three-dimensional structure of the present invention.
Figure 2 is a perspective view of the present invention after being folded.
Figure 3 is a top view of the present invention after being folded.
Fig. 4 is a schematic structural view of the present invention after the seat is installed on the seat support frame.

Reference sign names: 1, floor; 2, floor handle; 3, front handle; 4, rear groove; 5, front wheel assembly; 6, rear wheel assembly; 7, control device; 8, through hole; 9, front steering T-bar; 10, seat support frame; 11, T-handle lock; 12, protrusion.

### Detailed description

The following further describes the present invention based on the drawings and specific embodiments, but the implementation of the present invention is not limited thereto.

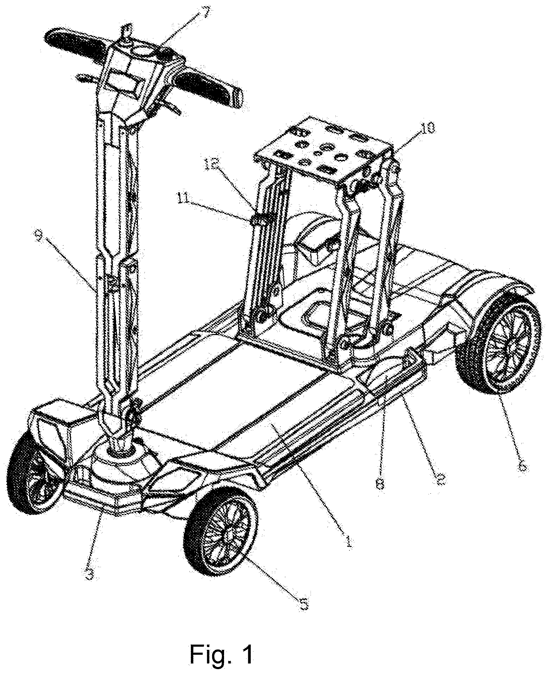

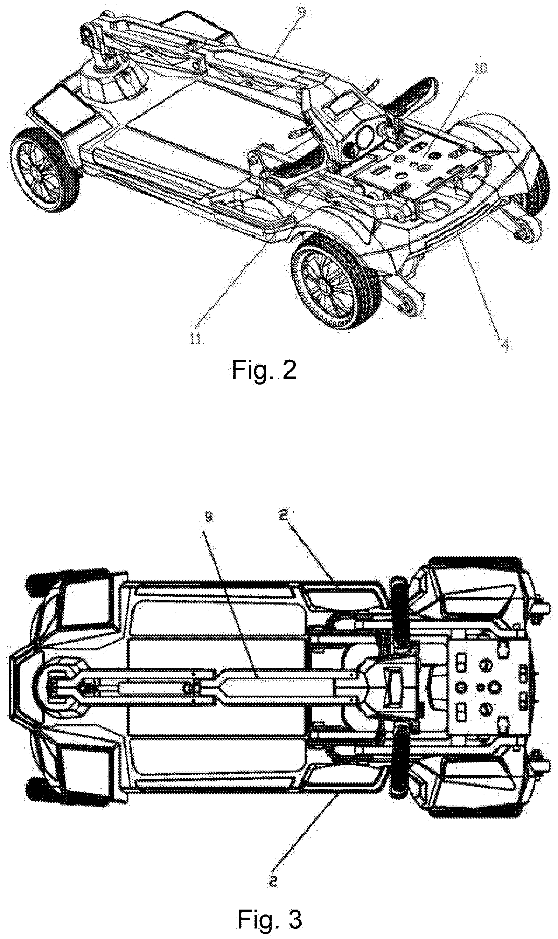

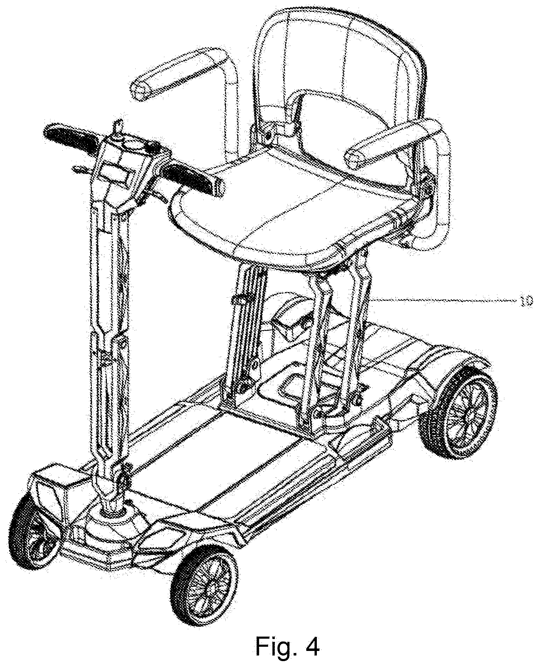

As shown in Figure 1, Figure 2, Figure 3 and Figure 4, a lightweight folding mobility scooter with front, rear, left, and right handle positions, includes a floor plate 1, and a floor plate handle 2 is provided on both sides of the floor plate 1, respectively. The two floor handles 2 are located at the centre of gravity on both sides of the floor 1, and the front of the floor 1 is provided with a front handle 3, and the rear part of the floor 1 is provided with a rear groove 5 that is used in conjunction with the front handle 4 for handling.

The bottom of the vehicle floor 1 is provided with a front wheel assembly 5, a rear wheel assembly 6 and a driving device for driving the rear wheel assembly 6. A control device 7 is provided at the end of the front handle 3, and the control device 7 is provided with a forward lever, a reverse lever, a speed control knob, a horn button, a front and rear light switch, and a battery level indicator. When the forward lever is moved backward, the driving device controls the rear wheel assembly 6 to move forward, and when the backward lever is moved backward, the driving device controls the rear wheel assembly 6 to move backward.

Preferably, the vehicle floor handle 2 and the vehicle floor 1 are integrally formed, and the vehicle floor handle 2 is a hollow-shaped vehicle floor handle 2 by opening through holes 8 on both sides of the vehicle floor 1. The floor handle 2 and the floor 1 are integrally formed, which can improve the firmness of the floor handle 2.

Preferably, the edge of the vehicle floor handle 2 is flush with the side of the vehicle floor 1. There is no excess part, reducing the space of the vehicle body.

Preferably, the front of the vehicle floor 1 is provided with a front steering T handle 9 that can be folded along the rear of the vehicle floor 1, and a foldable seat support frame 10 is provided on the upper plane of the vehicle floor 1 near the left and right handles 2 of the vehicle floor.

Preferably, one side of the seat support frame 10 is installed with two or more T handle locks 11 for folding and clamping the front steering T-bar 9.

Preferably, the T handle lock 11 is a rubber, silicone or plastic member, and the end of the T handle lock 11 is provided with a U-shaped, C-shaped or semi-circular protrusion 12. The T handlebar lock 11 can restrict the movement of the front of the vehicle to the T handle through the friction between the gel and the handle of the front of the vehicle.

Preferably, the front steering T handle 9 is folded along the tail of the vehicle floor 1 and then clamped and fixed with two T-bar head locks 11.

The present invention is provided with a vehicle floor handle 2 on both sides of the vehicle floor. The two vehicle floor handles 2 are located on both sides of the vehicle floor 1, and are positioned at the centre of gravity after the mobility scooter is folded. When the vehicle needs to be transported, the seat support frame is first folded and laid flat on the floor of the vehicle, and then fold the front T handle so that the front control device 7 of the head is stuck on the two T handle locks of the seat support frame to fix the front T handle 9 so it will not swing. Since the two vehicle floor handles 2 are located at the centre of gravity on both sides of the vehicle floor 1, the two vehicle floor handles 2 can be hand-held to keep the folded vehicle body in balance and facilitate transportation. A front handle 3 is provided at the front of the vehicle floor 1, and a rear groove part for carrying and used in cooperation with the front handle is provided at the rear of the vehicle floor 1. When two people lift the vehicle, one can be at the front of the vehicle and the other at the rear of the vehicle, and the vehicle can be easily moved by holding the handle of the front and the groove at the rear of the vehicle. After the product is folded, the occupied space of the vehicle body can be greatly reduced, and it may be conveniently accommodated in a transport vehicle.

Although the embodiments of the present invention have been shown and described, those of ordinary skill in the art can understand that various changes, modifications, and substitutions can be made to these embodiments without departing from the principle and structure of the present invention. And variations, the scope of the present invention is defined by the appended claims and their equivalents.

## Claims

1. A light-weight foldable mobility scooter including a vehicle floor with front, rear, left and right handle positions, is **characterized in that** a vehicle floor handle is provided on both sides of the vehicle floor, and both said vehicle floor handles are on both sides of the vehicle floor and at the position of the centre of gravity of the mobility scooter after the mobility scooter is folded, and a front handle is provided at the front of the vehicle floor, and the rear part of the vehicle floor is provided with a rear groove part for cooperating with the front handle for carrying.

2. The light-weight foldable mobility scooter with front, rear, left, and right handle positions according to claim 1, wherein the vehicle floor handle is integrally formed with the vehicle floor, and the vehicle floor handle is a hollow-shaped vehicle floor handle formed by through holes on both sides of the vehicle floor

3. The light-weight foldable mobility scooter provided with front, rear, left, and right handle positions according to claim 2, wherein the edge of the vehicle floor handle is flush with the side of the vehicle floor.

4. The light-weight foldable mobility scooter with front, rear, left and right handle positions according to claim 1, wherein a front steering T handle provided at the front of the vehicle floor can be folded along the rear of the vehicle floor, and a foldable seat support frame is provided on the upper plane of the vehicle floor near the left and right handles of the vehicle floor.

5. The light-weight folding mobility scooter with front, rear, left, and right handle positions according to claim 4, wherein two or more handlebar locks for folding and clamping the front steering T handle are installed on one side of the seat support frame

6. The lightweight folding mobility scooter with front, rear, left, and right handle positions according to claim 5, wherein the handlebar lock is a rubber, silicone or plastic member, and the end of the handlebar lock is provided with a U-shape, C-shaped or semi-circular protrusions.

7. The light-weight foldable mobility scooter with front, rear, left and right handle positions according to claim 5, wherein the front steering T handle is folded along the rear of the vehicle floor and then snapped and fixed with the two handlebar locks
